Europäisches Patentamt

European Patent Office

Office européen des brevets

(11) Publication number: 0 332 408
A1

(12) EUROPEAN PATENT APPLICATION

(21) Application number: 89302279.8

(22) Date of filing: 07.03.89

(51) Int. Cl.⁴: G 11 B 11/10
G 11 B 13/04

(30) Priority: 09.03.88 JP 53736/88

(43) Date of publication of application:
13.09.89 Bulletin 89/37

(84) Designated Contracting States: DE FR GB IT

(71) Applicant: Hitachi Maxell Ltd.
No 1-1-88, Ushitora Ibaraki-shi
Osaka-fu (JP)

HITACHI, LTD.
6, Kanda Surugadai 4-chome Chiyoda-ku
Tokyo (JP)

(72) Inventor: Tanaka, Yoshito 1816-4, Shimoinayoshi
Chiyodamura Niihari-gun
Ibaraki-ken (JP)

Fujiwara, Hideo 2-24-9, Keyakidai
Moriyamachi Kitasoma-gun
Ibaraki-ken (JP)

Kanazawa, Yasunori
4-5, Motoyokoyamacho-1-chome
Hachioji-shi (JP)

Nakao, Takeshi Haitsu Asahi 102
2327, Kamitsuruma
Sagamihara-shi (JP)

(74) Representative: Williams, Trevor John et al
J.A. KEMP & CO. 14 South Square Gray's Inn
London WC1R 5EU (GB)

(54) **Magneto-optical recording device.**

㉗ A magneto-optical recording device is provided which is capable of erasing, recording and/or reproducing information on the same track of a magneto-optical disc recording medium apparently at the same time. Three separate laser sources (2, 10, 12) are provided for emitting an erasing light beam, a recording light beam and a reproduction light beam to the recording medium, with each of the laser sources being adapted to irradiate the same track on recording medium with a light spot in such a manner that the light spots from the three laser sources are arranged in this order from the upstream side of the advancing track. Constant magnetic bias fields in opposite directions are generated at locations where the light beams from the first, erasing, and second, recording, light beam laser sources are irradiated.

FIG. 1

EP 0 332 408 A1

Bundesdruckerei Berlin

**Description**

## MAGNETO-OPTICAL RECORDING DEVICE

### BACKGROUND OF THE INVENTION

The present invention relates to a magneto-optical recording device in a light modulation mode, and particularly to a magneto-optical recording device which is capable of erasing, recording and reproducing information on the same track apparently at the same time.

The phrase "capable of erasing, recording and reproducing apparently or substantially at the same time" means herein that the recording device is capable of erasing information written at any desired location on a magneto-optical disk serving as a magneto-optical recording medium, writing new information thereon and reading information newly written therefrom within a single rotation of the disk.

Rewrite-type (erasable) magneto-optical disks have a light modulation mode or a magnetic field modulation mode. The magnetic field modulation mode of disk can be overwritten as described in, for example, Japanese Patent Laid-Open No. 107121/1976 and Japanese Patent Publication No. 48806/1985. In the magnetic field modulation mode, however, as the impedance of an electromagnetic coil used for applying a modulating magnetic field cannot be reduced too low, the recording frequency is limited to 0.5 MHz or less and thus recording of a signal with a frequency of several MHz is impossible.

On the other hand, it is known that in the light modulation mode an erasing beam and a recording beam are used for apparently overwriting by changing the direction of the magnetic field at the location where the two beams are irradiated (refer, for example, to "Comprehensible Optical Disk" pp. 91, 92, issued on December 10, 1985 by Optronics Co., Ltd.).

When erasing and recording operations are effected on the same track substantially at the same time in the light modulation mode of a magneto-optical recording medium, it has been desired to read out and check the information recorded on the same track substantially at the same time for the purposed of "convenient use" for a user.

The present invention has been achieved in consideration of the above-described point, and it is an object of the present invention to provide a magneto-optical recording device in a light modulation mode which is capable of substantially simultaneously erasing, recording and reproducing information on the same track.

### SUMMARY OF THE INVENTION

In order to achieve this object, the present invention provides a magneto-optical recording device comprising a first laser source for emitting an erasing light beam to a magneto-optical recording medium, a second laser source for remitting a recording light beam to the magneto-optical recording medium, a third laser source for emitting a reproducing light beam to the magneto-optical recording medium, each of the laser sources being adapted to irradiate the same track of the magneto-optical recording medium with a light spot in such a manner that the spots from the first, second and third laser sources are arranged in this order as viewed from an upstream side of the advancing track, and a magnetic field generation means for generating constant magnetic bias fields in opposite directions at locations where the light beams from the first and second laser sources are irradiated.

The magneto-optical recording device of the present invention thus configured is capable of erasing information previously recorded on a track of a magneto-optical disk serving as the magneto-optical recording medium by the erasing beam, which may for example be continuously irradiated by the first laser source, in cooperation with the magnetic field in a give direction applied by the magnetic field generation means. The recording beam is then irradiated to the location on the track from which information has been erased by the second laser source on the basis of the recording pulse during the rotation of the magneto-optical disk. Desired information is thus recorded on the same track by applying the magnetic field in the direction opposite to the direction of the magnetic field applied at the erase location. The reproducing beam from the third laser source is then irradiated to the location on the same track at which information was rerecorded so that information is read out (reproduced) by a reflected light of the reproducing beam. In this way, erasing, recording and reproducing can be achieved on the same track within one turn of the optical disk, and apparent overwriting and simultaneous reading can thus be performed, thereby enabling high-speed rerecording and reproducing. The device of the present invention therefore exhibits a high industrial value.

One of magnetic recording media which are suitable for use in the magneto-optical recording device of the present invention is a magneto-optical disk cartridge in which one magneto-optical disk is rotatably received in a case. Such a magneto-optical disk cartridge comprises two head windows which are respectively formed in opposite places in the upper and lower surface of the case for the purpose of exposing parts of the magneto-optical disk therefrom, and a shutter serving to open and close the two head windows. One of the head windows serves as a window exclusively used for an optical head of the magneto-optical recording device which is placed facing it. The other window serves as a window exclusively used for the magnetic field generation means for generating magnetic bias fields in the magneto-optical recording device which is placed facing it. The thickness of the case is set to a level greater than the gap between the optical head and the magnetic field generation means and the thickness of the optical disk is set to a level smaller than the gap between the optical head and the magnetic field generation means. The magneto-optical disk cartridge having the aforementioend arrangement can be easily carried, stored and handled.

Such a magneto-optical disk cartridge enables one of the head windows to face the optical head and the other head window to face the magnetic field generation means only by setting the cartridge containing the magneto-optical disk in the device, whereby erasing and recording in light modulation mode can be easily and surely carried out.

## BRIEF DESCRIPTION OF THE DRAWINGS

Fig. 1 is a block diagram of a preferred embodiment of a magneto-optical recording device in accordance with the present invention;

Fig. 2 is a perspective view of the second and third laser sources of the magneto-optical recording device shown in Fig. 1;

Fig. 3 is a schematic perspective view of the light spots respectively from the first, second and third laser sources of the magento-optical recording device shown i Fig. 1;

Fig. 4 is a schematic sectional view for exaplaining the erasing and reproducing states in the magneto-optical recording device shown in Fig. 1;

Fig. 5A, 5B, 5C and 5D are schematic graphs of beam intensities and magnetic fields;

Fig. 6A is a block diagram which is provided for explaining the magnetic field generation means of another preferred embodiment of the magneto-optical recording device in accordance with the present invention;

Fig. 6B is an explanatory view of a further preferred embodiment of the magneto-optical recording device in accordance with the present invention;

Figs. 7 to 9 show an example of a magneto-optical disk cartridge which is suitable for use in the magneto-optical recording device in light modulation mode shown in Figs. 1 to 5D in which Fig. 7 is a perspective view of the disk cartridge with a shutter in an open state as viewed from above, Fig. 8 is a perspective view of the disk cartridge as viewed from below, and Fig. 9 is a simplified explanatory view of the state wherein the disk cartridge is set in the device; and

Fig. 10 a perspective view of another preferred example of the magneto-optical disk cartridge.

## DESCRIPTION OF THE PREFERRED EMBODIMENTS

The present invention is described below with reference to unlimited embodiments shown in the drawings.

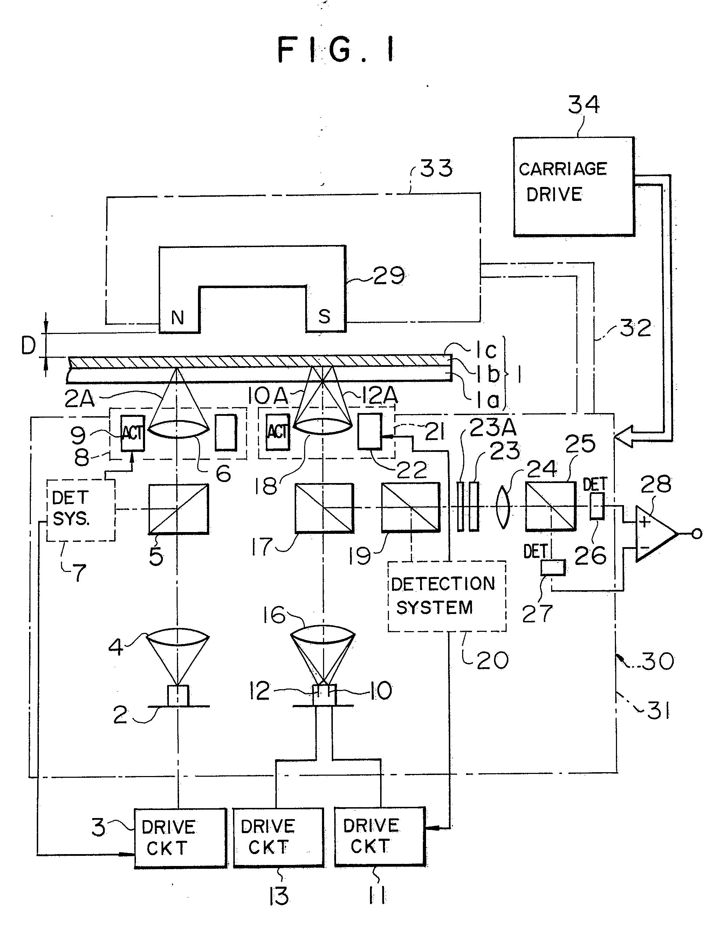

In Fig. 1, reference numeral 1 denotes a magneto-optical disk (referred to as "disk 1" hereinafter) in which a recording film (vertical magnetization film) 1b capable of exhibiting magneto-optical effects and a protect film 1c are formed on a transparent substrate 1a and which is rotated by a spindle (not shown).

Reference numeral 2 denotes a first laser source which emits an erasing light beam and which is controlled by a first laser driving circuit 3. The linearly polarized light beam emitted from the first laser source 2 is collimated to be a parallel beam by a collimator lens 4 and then led to an objective lens 6 through a beam splitter 5 so that the light beam focused by the objective lens 6 is impinged as a light spot with a diameter of about 1 to 2 μm onto the recording film 1b.

The beam emitted from the first laser source 2 is reflected from the optical disk 1 and then led to a first light intensity detection system 7 for detecting the intensity of a light signal through the objective lens 6 and the beam splitter 5. In response to the output from the light intensity detection system 7, the first actuator described below is controlled and driven so as to correct deviations in the focusing of the light spot and in the position relative to the track to which the light beam is to be irradiated. The first light intensity detection system 7 is also capable of detecting/discriminating the boundary between adjacent sectors, the boundary between adjacent tracks and an information (ID information) hole or pit previously formed in the disk 1. The first laser driving circuit 3 can be operated synchronously with the reference clock pulse based on the ID information or the like.

Reference numeral 8 denotes a first optical pick-up including the objective lens 6 and a first actuator 9 for controlling positions of the objective lens 6 in multiple directions and which comprises, for example, a voice coil. The first actuator 9 is controlled by the output from the first light Intensity detection system 7 and the objective lens 6 is driven so that the light spot is kept focused on a desired track of the recording film 1b while following the longitudinal vibration and eccentricity of the track.

Reference numeral 10 denotes a second laser source which emits a recording light beam and which is controlled by a second laser driving circuit 11.

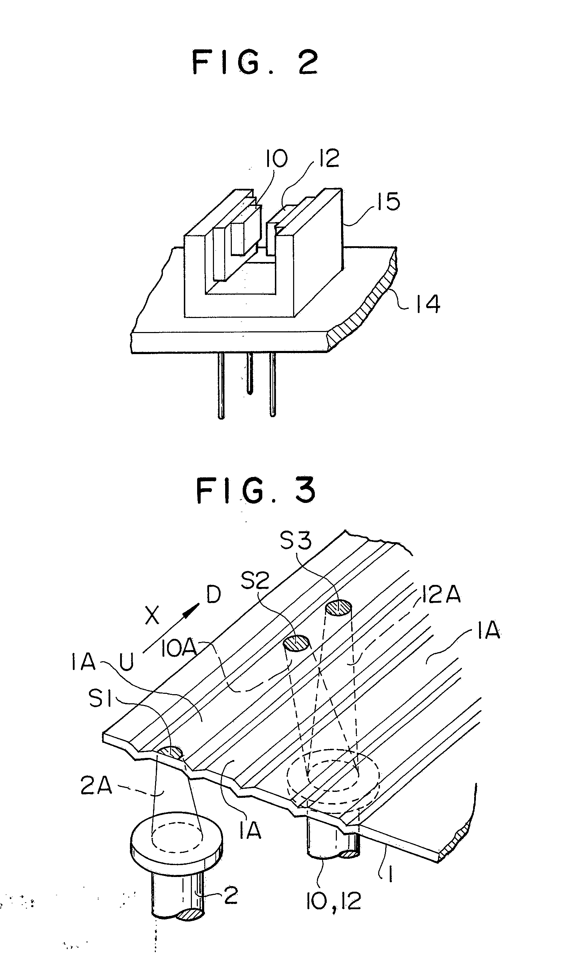

Reference numeral 12 denotes a third laser source which emits a reproducing light beam and which is controlled by a third laser driving circuit 13. The second laser source 10 and the third laser source 12 respectively comprise laser diode chips which are received in one package. As shown in Fig. 2, these laser sources 10, 12 are mounted on a support frame 15 opposite to each other at a given distance on a substrate 14 to form a compact package. The laser diode chip for the second laser source 10 emits a laser beam with a relatively high power of a wavelength of 830 nm during recording operation, and the laser diode chip for the third laser source 12 emits a light beam with a low power and low noise of a wavelength of 780 nm.

Each of the linearly polarized light beams from the second and third laser sources 10, 12 is collimated to be a parallel beam by a collimator lens 16 and then led to an objective lens 18 through a beam splitter 17 so that the light beam focused by the objective lens 18 is impinged as a light spot with a diameter of 1 to 2 μm on the recording film 1b. The recording light beam from the second laser source 10 and the reproducing light beam from the third laser source 12 are irradiated as the light spots on the recording film 1b through the same optical systems 16, 18. The light spot S2 from the second laser source 10 and the light spot S3 from the third laser source 12 are, however, separated from each other by a given distance on the recording film 1b due to deviation (inclination) of the optical axis of one of the light beams, as shown in Fig. 3.

The light spot S1 from the first laser source 2 and the light spots S2, S3 respectively from the second and third laser sources 10, 12 are irradiated on the same track 1A in such a manner that the light spots S1, S2 and S3 are placed in this order from the upstream side U of the rotational direction X of the disk 1 toward to downstream side D thereof. The distance between the light spots S1 and S2 may be any desired length so long as it is significantly greater than the distance between the light spots S2 and S3.

The beam emitted from each of the second and third laser sources 10, 12 is reflected or diffracted by the disk 1, then passed through the objective lens 18, reflected by the beam splitter 17 and a beam splitter 19 and then led to a second light intensity detection system 20. The light intensity detection system 20 detects/discriminates the above-described ID information and delivers a synchronous reference signal for recording and reproducing. The light intensity signal of the reflected or diffracted beam from the medium 1 of the beam emitted from the second or third laser source 11 or 13, preferably the second laser source with a higher intensity of light is also used as a positional deviation detection signal for driving and controlling the second actuator described below by the second light intensity detection system 20. Defocusing of the light spots S2, S3 and inappropriate tracking or deviation in the position relative to the track can thus be corrected.

Reference numeral 21 denotes a second optical pickup including the objective lens 18 and a second actuator 22 comprising, for example, a voice coil for controlling positions of the objective lens 18 in multiple directions. The second actuator 22 is controlled by the output signal from the second light intensity detection system 20. The objective lens 18 is so driven that the light spots S2, S3 are focused on a desired track 1A of the recording film 1b, while following the longitudinal vibration of the disk 1 and the eccentricity of the track.

The linearly polarized light from the third laser source 12 for reproduction is reflected from the disk 1 in such a manner that the plane of polarization is rotated according to the recorded information (the direction of magnetization in each portion of the track 1A), passed through the objective lens 18, reflected by the beam splitter 17, passed through the beam splitter 19 and then led to a polarized beam splitter 25 through a filter 23A adapted to pass the reproducing or retrieving beam of wavelength 780 nm therethrough, a $\lambda/2$ wavelength plate 23 and a lens 24. The magneto-optical information is then converted into an optical information, by the polarization beam splitter 25, comprising polarization components S, P having polarization planes which are respectively parallel and perpendicular to the plane of incidence on the disk 1, then subjected to photoelectric conversion by detectors 26, 27 and supplied to a differential amplifier 28 from which the magneto-optical information (information with respect to the directions of magnetization) recorded in the recording layer 1b of the disk 1 is delivered in the form of electric signals.

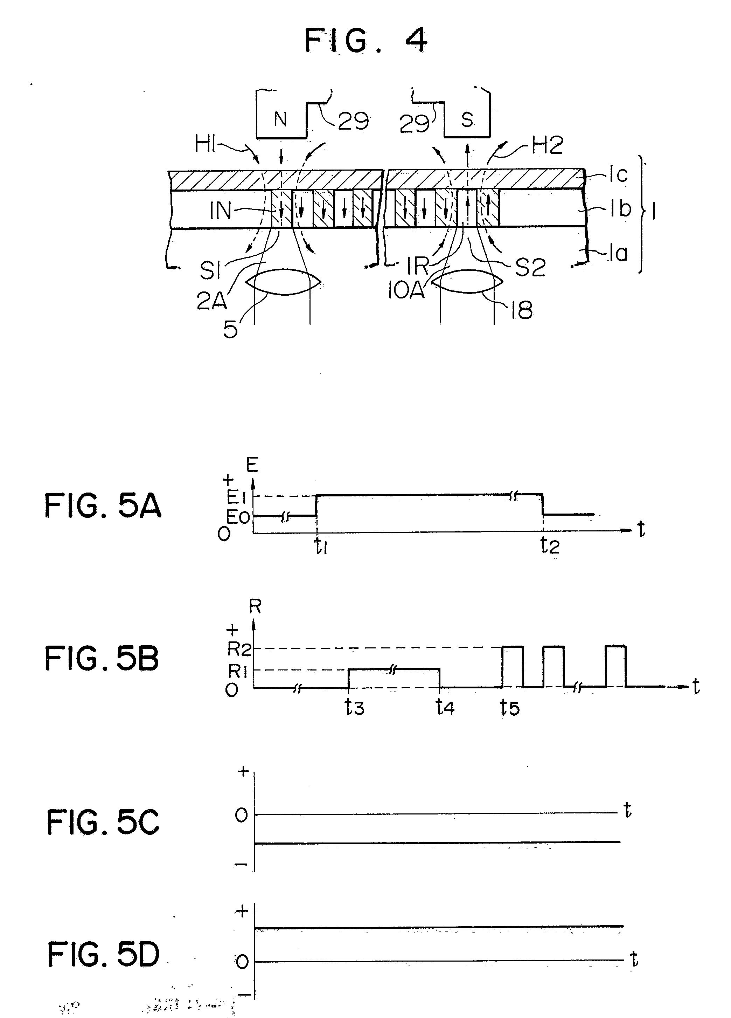

Reference numeral 29 denotes a magnetic field generation means which comprises a permanent magnet and is placed facing a side of the disk 1 opposite to the first and second optical pickups 8, 21, with the disk 1 interposed therebetween. The N-pole of the magnetic field generation means 29 is faced to a portion of the disk 1 at which the erasing laser beam from the first laser source 2 is irradiated, and the S-pole thereof is faced to a portion of the disk 1 at which the recording laser beam from the second laser source 10 is irradiated. In other words, as schematically shown in Fig. 4, the magnetic field generation means 29 is so arranged that magnetic fields H1, H2 in opposite directions are applied to the portions of the disk 1 to which the erasing beam 2A and the recording beam 10A are respectively irradiated. Erasing operation is performed by the erasing beam 2A in cooperation with the magnetic field H1, and recording operation is performed by the recording beam 10A in cooperation with the magnetic field H2. It is a matter of course that the arrangement of the N and S poles of the permanent magnet 29 may be reversed.

Reference numeral 30 denotes a carriage comprising a carriage base 31 on which at least the optical elements 2, 4, 5, 8, 10, 12, 16, 17 and 21 arranged in the vertical direction in Fig. 1 are mounted and an upper carriage member 33 which is fixed to the carriage base 31 through a connecting means 32. The carriage 30 is slidingly moved relative to a support (not shown) by a carriage drive 34 such as a servo-motor. In this embodiment, the magnetic field generation means 29 is fixed to the upper carriage member 33, the distance D between the lower end of the magnet 29 and the surface (reference surface) of the disk 1 being set to about 0.5 mm to several mm. Such an arrangement can prevent any contact of the magnetic field generation means 29 with the disk 1 during the rotation of the disk 1 even if the disk 1 may be deformed to some extent. There is therefore not a fear of crash of the head or damage of the disk, and appropriate magnetic fields can be applied to the recording film 1b. Since the magnetic field generation means 29 comprises the permanent magnet, no modulation is required for reversing the magnetic fields, as in heads for magnetic disks comprising electromagnets. It is therefore possible to reduce the electricity consumption and effect high-speed erasing, recording and reproducing.

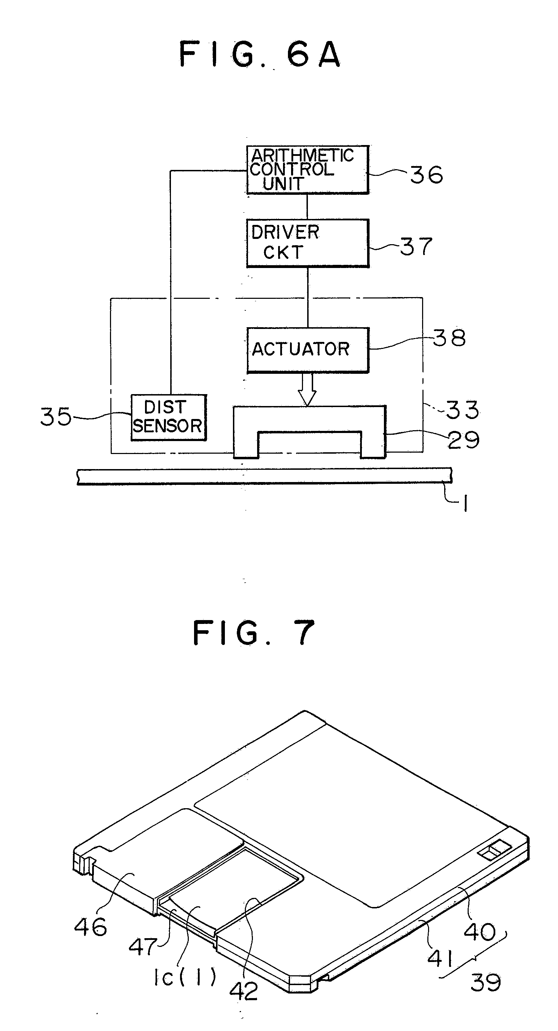

As shown in Fig. 6A, in order to keep the constant distance D between the surface of the disk 1 and the lower end of the magnetic field generation means 29 which is mounted on the upper carriage member 33, the magnetic field generation means 29 may be slightly moved in the vertical direction by an actuator 38 (for example, a bimorph, a voice coil or the like) driven by an arithmetic control unit 36 and a driver circuit 37 in response to the output d which represents a distance detected by a distance sensor 35. In this case, it is also possible to effectively perform erasing and reproduction with a relatively low magnetic energy, cohile avoiding crash of the head and damage of the disk.

A description will now be given of the operation of the above-described arrangement.

When the magneto-optical information recorded previously in a location of a desired track on the recording film 1b of the rotating disk 1 is erased and then new information is rerecorded in and reproduced from the location of the track, the carriage 30 is first moved in the radial direction of the disk 1 so that the first to third light spots S1, S2, S3 from the first and second optical pickups 8, 21 are focused on the desired track 1A and that the magnetic field generation means 29 is placed in the corresponding position.

In this state, a light beam 2A with a relatively low power (with which the recording film 1b is not heated to a temperature near the Curie temperature thereof, i.e., the power with which the coercive force of the magnetic material of the film 1b is not reduced substantially) is given to the track 1A from the first laser source 2. When the laser power monitor 7 detects the ID information by means of the reflected or diffracted light of he beam 2A, as shown in Fig. 5A, the power level E of the first laser source 2 is raised from the address reading level $E_0$ to the erasing level by the first laser driving circuit 3 at a given timing $t_1$ relative to the reference position detection pulse and the laser source 2 keep generating a continuous erasing beam. The intensity of the beam 2A from the first laser source 2 controlled by the first laser driving circuit 3 which performs control synchronously with the clock pulse after the reference position detection pulse is again reduced to the address reading level $E_0$ at a time $t_2$ at which the erasing of the region to be erased is completed.

The magnetic material 1b in a portion 1N of the recording film 1b to which the beam 2A from the first laser source 2 at the erasing level $E_1$ is irradiated in the form of the light spot S1 is heated up near its Curie temperature, and the coercive force is reduced. Therefore, the information previously recorded in the form of a magnetization in a sense of direction defined by the magnetic field generated by the magnetic field generation means 29 is erased. Fig. 5C shows the magnetic field in the negative (-) direction (doconward in the sheet of the drawing) which is applied to the erasing portion 1N from the magnetic field generation means 29.

As shown in Fig. 5B, the second laser driving circuit 11 causes the light beam 10A with a relative low power level $R_1$ to be emitted from the second laser source 10 at a given timing $t_3$ in the course of the above-described erasing i.e. operation, $t_1 < t_3 < t_2$. At a time $t_5$ after a desired time defined by a recording information from a time $t_4$ at which the ID information at the front or leading edge of the erased region is detected by the laser power monitor 20 from the reflected light of the light beam 10A, the second laser driving circuit 11 causes the recording laser pulse at a high power level $R_2$ to be supplied from the second laser source 10 in synchronism with the clock pulse after the reference position detection pulse. The portion 1R of the magnetic film 1b to which the recording beam 10A at the recording level $R_2$ from the second laser source 10 is irradiated is heated up near the Curie temperature thereof. Desired information is successively written in the recording film 1b by the magnetic field from the magnetic field generation means 29 in the direction opposite to that for erasing. The recording laser pulse R is cut off at a given timing at which the writing or recording should be stopped. Fig. 5D shows the magnetic field in the positive (+) direction which is applied to the rerecording portion 1R from the magnetic field generation means 29.

In the meantime, a reproducing light beam 12A at a low power level is continuously emitted from the third laser source 12. When the ID information of the rerecorded portion is detected by the second laser power monitor 20 from the reflected light of the light beam 12A, the second laser power monitor 20 generates the ID information as the reference position detection pulse to a reproduction control circuit (not shown). The magneto-optical information rerecorded during the rotation of the disk 1 is continuously delivered in the form of a reproduced output signal from the differential amplifier 28 to a circuit at a subsequent stage (not shown), whereby the rerecorded information can be checked.

As described above, erasing, recording and reproducing operations of the information on the same track (in some cases, the same sector) are performed apparently and substantially at the same time. Apparent overwriting and simultaneous reading can thus be achieved, and high-speed recording and reproducing can be performed.

In order to control the timings of erasing and writing, information of the rotational or angular position may be continuously detected from the disk itself or a rotation drive system thereof instead of using the clock pulses from clock pulse generators (not shown).

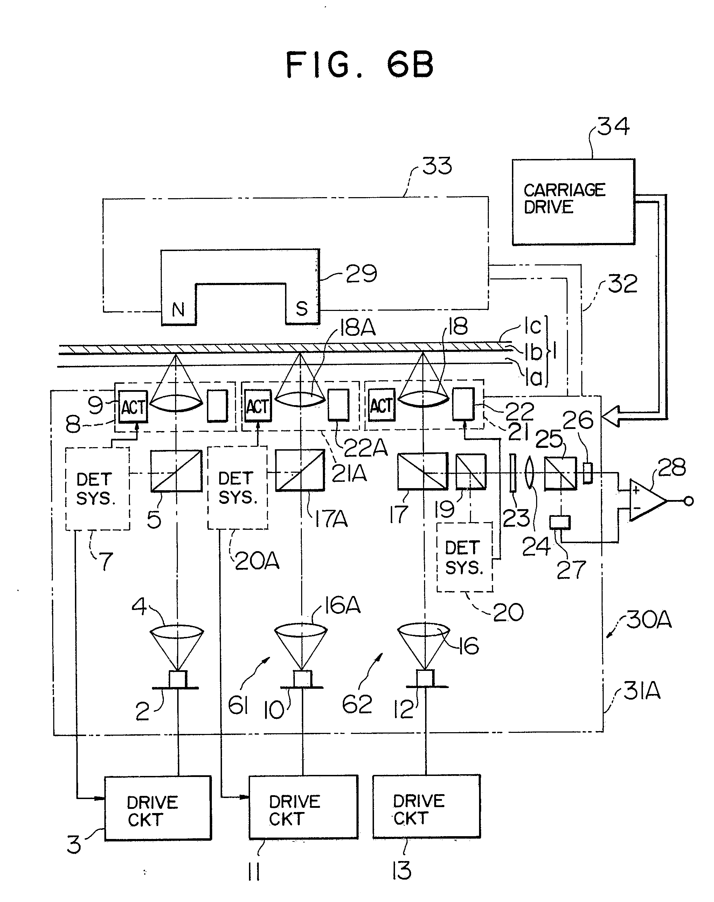

In addition, a writing or recording optical system 61 and a reproducing optical system 62 may be separately provided as shown in Fig. 6B instead of the optical system 10 to 20 commonly used for writing and reproducing as shown in Figs. 1 to 3, where elements 16A, 17A, 18A, 20A, 21A, 22A, 30A, 31A have the similar functions as those of the elements 16, 17, 18, 20, 21, 22, 30, 31 shown in Fig. 1.

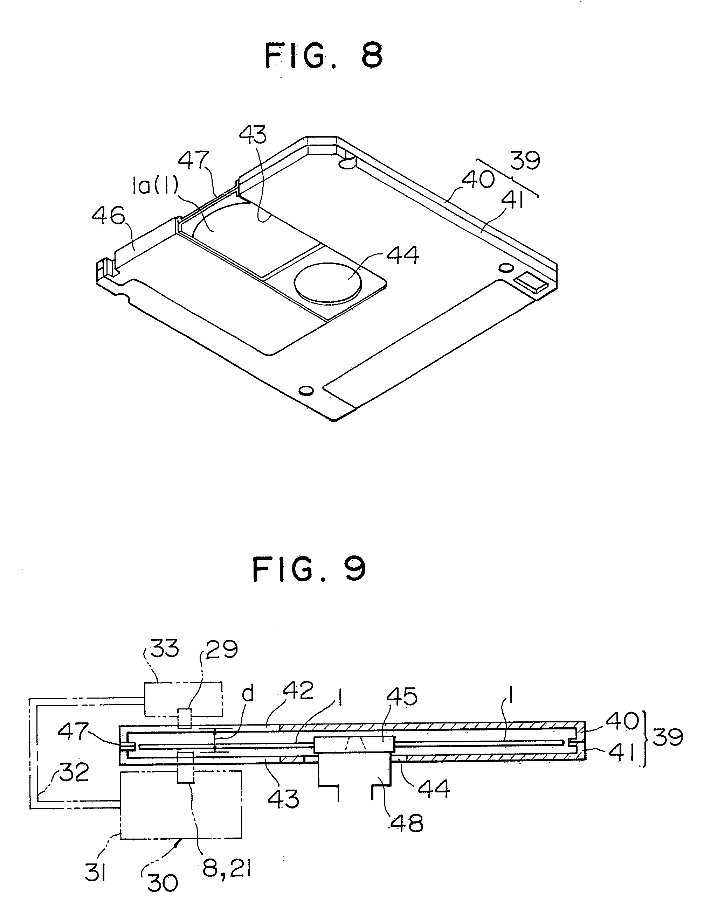

Figs. 7 to 9 are explanatory views of the magneto-optical disk cartridge used in the above-described magneto-optical recording device in a light modulation mode. Fig. 7 is a perspective view of the disk cartridge as viewed from above, Fig. 8 is a perspective view of the same as viewed from below and Fig. 9 is a simplified explanatory sectional view of the state in which the disk cartridge is mounted to the device, the same portions as those described above being denoted by the same reference numerals.

In each of the drawings, reference numeral 39 denotes a synthetic resin case comprising a upper case body 40 and a lower case body 41 which are assembled to form an integral unit, the disk (magneto-optical disk) 1 being rotatably received in the case 39. A first head window 42 and a second head window 43 are respectively formed in the opposite portions of the upper case body 40 and the lower case body 41 so as to make part of the disk 1 to be accessible there through. A center hole 44 is formed in the central portion of the lower case 41 so as to make a center hub 45 of the disk 1 (refer to Fig. 9) to be accessible therethrough. Reference numeral 46 denotes a shutter which is slidably attached to the case 39 so as to close the first and second head windows 42, 43 and the center hole 44 during unuse of the disk cartridge. The shutter 46 is opened/closed depending upon the loading/unloading of the disk cartridge into and from the recording device. Reference numeral 47 denotes a thin portion formed in the outer periphery of the first and second head windows 42, 43. The thickness of the thin portion 47 is smaller than the set distanced between each of the first and second optical pickups 8, 21 and the magnetic field generation means 29.

The disk 1 is received in the case 39 in the state wherein the transparent plate 1a of the disk 1 faces the lower base body 41 and the recording film 1b (protection film 1c) thereof faces the upper case body 40. In the state in which the disk cartridge is mounted in the device as shown in Fig. 9 and the center hub 45 is chucked by a spindle member 48, the magnetic field generation means 29 faces the recording film 1b of the disk 1 which is exposed through the first head window 42, and the first and second optical pickups 8, 21 face the transparent plate 1a of the disk 1 which is exposed through the second head window 43. In this state, the aforementioned erasing, recording and reproducing operations are performed.

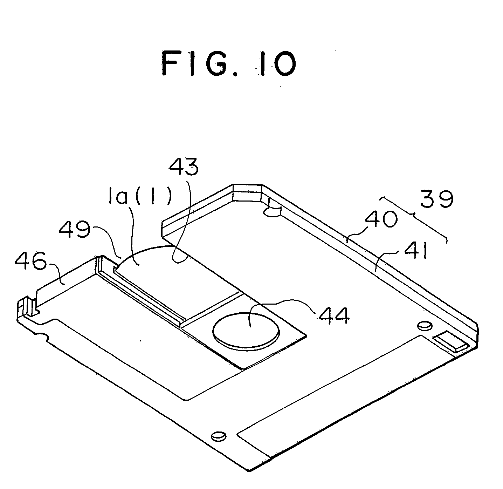

As shown in each of the drawings, because the thin portion 47 is formed at the extension of the first and second head windows 42, 43 of the case 39, each of the members 8, 21, 29 can be brought close to the disk 1 simply by moving the carriage 30 in the plane of the disk 1 without vertical relative motion of the members 8, 21, 29, when the carriage 30 is so designed that the distance d between each of the first and second optical pickups 8, 21 and the magnetic field generation mans 29 is smaller than the thickness of the case 39, as shown in Fig. 9. In order to achieve this, as shown in Fig. 10, a notch 49 may be formed at the extension of the first and second head windows 42, 43, i.e. the windows 42, 43 may be completely opened at loading end of the case 39. This enables the use of the carriage 30 which is so designed that the distance d between each of the first and second optical pickups (optical heads) 8, 21 and the magnetic field generation means 29 is set to a value smaller than the thickness of the case 39 and greater than the thickness of the disk 1.

The magneto-optical disk cartridge which is suitable for use in the magneto-optical recording device of the light modulation mode and which is easy to handle can thus be provided. However, the disk cartridge used in the magneto optical recording device is not limited to that shown in Figs. 7 to 9. For example, the disk cartridge may be so designed that the disk is led out of the case and chucked when the disk cartridge is inserted or loaded into the recording device. Alternatively, the disk cartridge may be of the type in which the disk is manually taken out from the case for use.

The embodiments above can be modified within the range of the spirit of the present invention. Various variations in the method of synchronously timing of erasing, recording and reproduction and the like, for example, can be employed by persons skilled in the art.

## Claims

1. A magneto-optical recording device comprising a first laser source (2) for emitting an erasing light beam to a magneto-optical recording medium (1); a second laser source (10) for emitting a recording light beam to said magneto-optical recording medium (1); a third laser source (12) for emitting a reproduction light beam to said magneto-optical recording medium (1); each of said laser sources (2, 10, 12) being adapted to irradiate a same track (1A) on said magneto-optical recording medium (1) with a light spot (S1, S2, S3) in such a manner that said light spots (S1, S2, S3) from said first, second and third laser sources (2, 10, 12) are arranged in this order from an upstream side of the advancing track (1A); and a magnetic field generation means (29) for generating constant magnetic bias fields in opposite directions at locations (1N, 1R) where said light beams from said first and second laser sources (2, 10) are irradiated.

2. A magneto-optical recording device according to Claim 1, wherein a laser diode chip for said second laser source (10) and a laser diode chip for said third laser source (12) are received in the same package, and said light beams emitted from said second and third laser sources (10, 12) are led onto said magneto-optical recording medium (1) through a same optical system (16, 17, 18) to form said light spots (S2, S3) at a given distance therebetween.

3. A magneto-optical recording device according to Claim 1, wherein said magnetic field generation means (29) comprises a permanent magnet and is placed at a side of said recording medium (1) opposite to a side to which said light spots (S1, S2, S3) are irradiated from said laser sources (2, 10, 12) with said magneto-optical recording medium (1) interposed therebetween, the permanent magnet (29) as being mounted on a same carriage (30) as detection means (8, 21) for detecting the light beams of said light spots (S1, S2, S3) reflected from said recording medium (1) so as to be moved in a direction crossing said track (1A)

4. A magneto-optical recording device according to Claim 3, wherein said magnetic field generation means (29) is stationarily held by said carriage (30) at a position 0.5 mm or more apart from a reference surface of said magneto-optical recording medium (1).

5. A magneto-optical recording device according to Claim 3, wherein said magnetic field generation means (29) is so controlled as to be kept placed at a given distance from the surface of said magneto-optical recording medium (1) by an actuator (38) provided on said carriage (30).

# FIG. 1

# FIG. 2

# FIG. 3

# FIG. 4

## FIG. 5A

## FIG. 5B

## FIG. 5C

## FIG. 5D

# FIG. 6A

```
              ┌─────────────┐
              │ ARITHMETIC  │
              │ CONTROL     │─── 36
              │ UNIT        │
              └─────────────┘
                     │
              ┌─────────────┐
              │ DRIVER      │─── 37
              │ CKT         │
              └─────────────┘
                     │
              ┌─────────────┐
              │ ACTUATOR    │─── 38
              └─────────────┘
                     ║
                     ▼
    ┌────────┐   ┌──────────────┐ ─── 33
35 ─│ DIST   │   │              │
    │ SENSOR │   │   ┌──────┐   │ ─── 29
    └────────┘   └───┘      └───┘
  ─────────────────────────────────
                                  ─── I
```

# FIG. 7

46   47   Ic( I )   42   41   40   39

# FIG. 6B

# FIG. 8

# FIG. 9

# FIG. 10

| DOCUMENTS CONSIDERED TO BE RELEVANT | | | EP 89302279.8 |
|---|---|---|---|
| Category | Citation of document with indication, where appropriate, of relevant passages | Relevant to claim | CLASSIFICATION OF THE APPLICATION (Int. Cl.4) |
| X | EP - A2 - 0 126 596 (XEROX CORPORATION) * Fig. 1,2,4,5; abstract; claim 5 * ———— | 1-3 | G 11 B 11/10 G 11 B 13/04 |
| | | | TECHNICAL FIELDS SEARCHED (Int. Cl.4) |
| | | | G 11 B 11/00 G 11 B 7/00 |

The present search report has been drawn up for all claims

| Place of search | Date of completion of the search | Examiner |
|---|---|---|
| VIENNA | 02-06-1989 | BERGER |